Europäisches Patentamt

European Patent Office

Office européen des brevets

(19)

(11) Veröffentlichungsnummer: **0 001 069**
**B1**

(12) **EUROPÄISCHE PATENTSCHRIFT**

(45) Veröffentlichungstag der Patentschrift:
14.07.82

(21) Anmeldenummer: 78100722.4

(22) Anmeldetag: 22.08.78

(51) Int. Cl.³: **B 23 K 9/06**

(54) Schweißstromquelle zum Lichtbogenschweißen mit Wechselstrom.

(30) Priorität: 10.09.77 DE 2740860

(43) Veröffentlichungstag der Anmeldung:
21.03.79 Patentblatt 79/6

(45) Bekanntmachung des Hinweises auf die Patenterteilung:
14.07.82 Patentblatt 82/28

(84) Benannte Vertragsstaaten:
BE FR SE

(56) Entgegenhaltungen:
DE-A-2 419 035
FR-A-1 474 633
FR-A-2 260 415
GB-A-1 003 250
»Radio and Electronics Constructor«, Juni 1975,
Seite 682

(73) Patentinhaber: MESSER GRIESHEIM GMBH,
Patentabteilung Hanauer Landstrasse 330,
D-6000 Frankfurt/Main 1 (DE)

(72) Erfinder: Röhm, Ernst, C.v. Hofackerstrasse 10,
D-8132 Tutzing (DE)

## Schweißstromquelle zum Lichtbogenschweißen mit Wechselstrom

Die vorliegende Erfindung betrifft eine Schweißstromquelle zum Lichtbogenschweißen mit Wechselstrom, insbesondere zum Schweißen unter erhöhter elektrischer Gefährdung, z. B. in engen Räumen, mit einem Schweißtransformator und einem an dessen Sekundärwicklung angeschlossenen Schweißstromkreis, dem ein Gleichrichterblock zugeordnet ist, wobei bei Leerlauf des Schweißstromkreises der Gleichrichterblock in den Schweißstromkreis einschaltbar ist und mit Schweißbeginn dieser Gleichrichterblock ohne Schweißunterbrechung aus dem Schweißstromkreis wegschaltbar ist.

Mit dieser beispielsweise aus der FR-PS 2 133 609 bekannten Schweißstromquelle wird ermöglicht, das Zünden des Lichtbogens mit einer Gleichspannung bis zu einem Scheitelwert von 100 Volt durchzuführen, die einerseits beim Schweißen unter erhöhter elektrischer Gefährdung noch zugelassen ist und andererseits gegenüber der dabei höchstzulässigen Leerlaufwechselspannung von 42 Volt bekanntermaßen erhebliche zündtechnische Vorteile bringt. Dabei wird beim Verlöschen des Lichtbogens, da der Schweißstrom unterbrochen ist und somit der Schweißstromkreis dann leerläuft, der Gleichrichterblock selbsttätig in den Stromkreis geschaltet, so daß unmittelbar im Leerlauf und zum Zünden eine Gleichspannung ansteht. Nach dem Zünden, also mit Schweißbeginn, wird erfindungsgemäß der Gleichrichterblock ohne Schweißstromunterbrechung weggeschaltet.

Bei der aus der FR-PS 2 133 609 bekanntgewordenen Schweißstromquelle ist der Gleichrichterblock direkt mit der Sekundärseite des Transformators verbunden und muß entsprechend dem am Transformator 10 einstellbaren maximalen Schweißstrom, der je nach Auslegung der Schweißstromquelle in der Größenordnung von 100 A bis 2000 A liegt, ausgelegt werden, was einen hohen wirtschaftlichen und technischen Aufwand erfordert.

Aufgabe der vorliegenden Erfindung ist es, diesen Nachteil zu vermeiden und insbesondere eine Einrichtung zu schaffen, bei der unter Beibehaltung der eingangs beschriebenen Vorteile eine weniger aufwendige Schweißstromquelle erhalten wird.

Zur Lösung dieser Aufgabe wird vorgeschlagen, daß bei einer Einrichtung der eingangs genannten Art der Gleichrichterblock eine Diode mit in Reihe vorgeschaltetem Zündgleichstrombegrenzungswiderstand aufweist. Durch diesen Zündgleichstrombegrenzungswiderstand, welcher bevorzugt für einen Zündstrom im Bereich von 3−20 A vorzugsweise 5−7 A ausgelegt ist, wird in Verbindung mit der entsprechend auf diese Verhältnisse ausgelegten Diode eine besonders einfache und kostengünstige Stromquelle erhalten, mit dem Vorteil einer optimalen und störungsfreien Gleichstromzündung bei Wechselstromschweißen. Durch die Begrenzung des Zündgleichstroms auf einen kleinen, aber ausreichenden Wert wird die Baugröße des Widerstandes 22 und der Diode 21 sehr klein im Vergleich zum Aufwand für die Diode 16 nach der FR-PS 2 133 609. Durch die erfindungsgemäße Maßnahme wird insbesondere beim Verschweißen von umhüllten Stabelektroden eine einwandfreie Zündung erreicht.

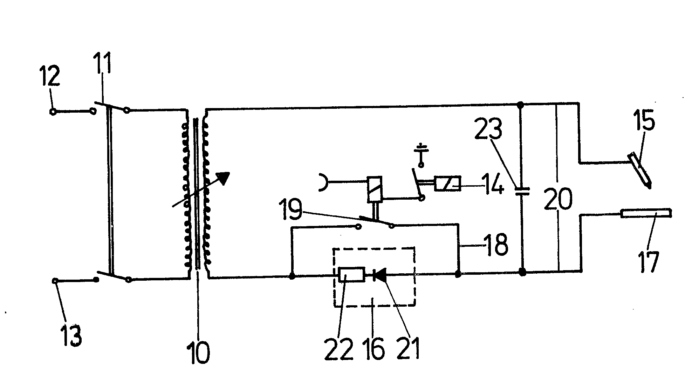

Die Erfindung wird anhand der in der Zeichnung schematisch dargestellten Schaltungsanordnung für das Lichtbogenschweißen mit Wechselstrom näher beschrieben.

Die in der Zeichnung dargestellte Schaltanordnung besteht aus einem Schweißstromtransformator 10, dessen Primärwicklung beispielsweise über einen zweipoligen Netzschalter 11 mit den Polklemmen 12 und 13 eines Wechselstromnetzes verbunden ist. Der Transformator ist beispielsweise als verstellbarer Streu-Kern-Transformator zur Einstellung der gewünschten Schweißstromstärke ausgebildet. Das eine Ende der Sekundärwicklung des Transformators 10 ist mit einer Schweißelektrode 15 eines Elektrodenhalters oder eines Schweißbrenners verbunden. Das andere Ende der Sekundärwicklung des Transformators 10 ist über einen Gleichrichterblock 16 mit einem Werkstück verbunden. Der Gleichrichterblock 16 ist durch die Leitung 18 überbrückt, in welcher ein Schalter 19 angeordnet ist. Der Schalter 19 wird durch ein Relais 14 oder einen andersartigen Impulsgeber geschaltet. Gemäß der vorliegenden Erfindung weist der Gleichrichterblock 16 eine Diode 21 mit in Reihe geschaltetem Zündgleichstrombegrenzungswiderstand 22 auf. Ein ausgangsseitig im Schweißstromkreis 20 parallel zur Lichtbogenstrecke vorgesehener Kondensator ist mit 23 bezeichnet.

Wird der zweipolige Netzschalter 11 geschlossen, so liegt an der Sekundärwicklung des Transformators 10 eine Wechselspannung, beispielsweise 70 Volt effektiv. Da bei nichtbrennendem Lichtbogen zwischen Elektrode 15 und dem Werkstück 17 der Schalter 19 geöffnet ist, liegt dann an der Lichtbogenstrecke eine Gleichspannung von rund 98 Volt zur Zündung des Lichtbogens. Nach Zündung des Lichtbogens fließt im Schweißstromkreis 20 Schweißgleichstrom und der Schalter 19 wird selbsttätig geschlossen, wodurch unterbrechungslos auf den für das Schweißverfahren erforderlichen Schweißwechselstrom umgeschaltet wird.

Durch den vorgesehenen Zündgleichstrombegrenzungswiderstand 22 wird somit beim Schweißbeginn ein kleiner Zündgleichstrom erreicht, der durch die Entladung des Kondensators 23 zum Beginn des Zündens unterstützt wird. Der am Transformator 10 beispielsweise durch Verstellung des Streukerns eingestellte Schweißwechselstrom wird durch Schließen des Kontaktes 19 nach dem Zünden an die Lichtbogenstrecke gelegt. Die Diode 21 sowie der Zündgleichstrombegrenzungswiderstand 22 können vorteilhaft aufgrund des vergleichsweise geringen Schweißstroms (Größenordnung 3—20 A) und des nur kurzzeitigen Wirksamwerden (Zündung) für geringste Betriebsdaten dimensioniert werden.

Die Überbrückung des Gleichrichterblocks 16 mit der Diode 21 und dem Zündgleichstrombegrenzungswiderstand 22 erfolgt über die Leitung 18 durch Schließen des Kontaktes 19. Dabei kann anstelle der vorgesehenen Relaisanordnung 14 auch eine Halbleiteranordnung, beispielsweise ein Thyristorwechselstromschalter mit zugeordneter Impulssteuerung vorgesehen werden. Die Betätigung des Kontaktes 19 bzw. des an dessen Stelle vorgesehenen Thyristors wird durch einen Umschaltimpuls erreicht. Durch den Zündgleichstrom treten folgende Veränderungen gegenüber dem Leerlaufzustand auf:

1. Die Ausgangspannung der Schweißstromquelle sinkt von dem hohen Leerlaufwert 100 Volt auf einen Wert unter 20 Volt bzw. nahe 0 Volt ab.
2. Die Spannung am Widerstand 16 bzw. an dem Kontakt 19 steigt von dem Wert 0 auf mindestens 80 Volt. Dasselbe geschieht an einem anderen ohmschen oder induktiven Widerstand im Schweißstromkreis oder im Primärkreis des Transformators 10.

Am Schweißende, also beim Übergang zum Leerlauf, drehen sich diese Bedingungen um. Diese der jeweiligen Betriebsart Leerlauf oder Last eindeutig zugeordneten Zustände können in vorteilhafter Weise zur Impulsgabe an das Schütz 14 oder die Impulssteuerung für den Thyristorschalter verwendet werden.

**Patentansprüche**

1. Schweißstromquelle zum Lichtbogenschweißen mit Wechselstrom, insbesondere zum Schweißen unter erhöhter elektrischer Gefährdung, z. B. in engen Räumen, mit einem Schweißtransformator, und einem an dessen Sekundärkreis angeschlossenen Schweißstromkreis, dem ein Gleichrichterblock zugeordnet ist, wobei bei Leerlauf des Schweißstromkreises der Gleichrichterblock in den Schweißstromkreis einschaltbar ist und wobei ferner mit Schweißbeginn dieser Gleichrichterblock ohne Schweißstromunterbrechung aus dem Schweißstromkreis wegschaltbar ist, dadurch gekennzeichnet, daß der Gleichrichterblock (16) eine Diode (21) mit in Reihe geschaltetem Zündgleichstrombegrenzungswiderstand (22) aufweist.
2. Schweißstromquelle nach Anspruch 1, dadurch gekennzeichnet, daß der Zündgleichstrombegrenzungswiderstand (22) für einen Zündstrom im Bereich von 3—20 A, vorzugsweise 5—7 A ausgelegt ist.

Claims

1. Welding current source for arc welding with alternating current, especially for welding under increased electrical danger, e.g. in small rooms, with a transformer welding power supply and a welding power circuit which is connected with the secondary circuit of the transformer welding power supply; a rectifier apparatus is provided for the welding power circuit whereby the rectifier apparatus is connectable in the welding power circuit when the latter is in the open circuit stage, and whereby, moreover, at the start of welding, the rectifier apparatur is disconnectable from the welding power circuit without cessation of the welding current characterized in, that the rectifier apparatus (16) has a diode (21) which is connected in series with an ignition-direct-current-limiting-resistor (22).

2. Welding current source according to Claim 1 characterized in, that the ignition-direct-current-limiting-resistor (22) is dimensioned for an ignition current in the range of 3—20 A, preferable of 5—7 A.

Revendications

1. Source de courant de soudage pour le soudage à l'arc avec courant alternatif, notamment pour le soudage dans des conditions où les risques électriques sont élevés, par exemple dans des espaces étroits, avec un transformateur de soudage et un circuit de courant de soudage raccordé au circuit secondaire de ce transformateur, un bloc redresseur étant associé à ce circuit de courant de soudage, ce bloc transformateur étant susceptible d'être branché sur le circuit de courant de soudage lors du fonctionnement à vide de ce circuit de courant de soudage, et étant susceptible en outre d'être débranché de ce circuit de courant de soudage au début de soudage sans interruption du courant de soudage, source de courant de soudage caractérisée en ce que le bloc redresseur (16) comporte une diode (21) avec, branchée en série, une résistance (22) de limitation du courant et de compensation d'allumage.

2. Source de courant de soudage selon la revendication 1, caractérisée en ce que la résistance (22) de limitation du courant et de compensation d'allumage est établie pour un courant d'allumage de 3 à 20 A, de préférence de 5 à 7 A.